# FASCICULE DE BREVET EUROPEEN

(11) **EP 3 375 297 B1**
(45) Date de publication et mention de la délivrance du brevet: **06.09.2023**
(21) Numéro de dépôt: 18162143.4
(22) Date de dépôt: 15.03.2018
(51) Int. Cl.: A23K 50/15, A23K 40/25

(54) **PROCEDE DE FABRICATION D'UN ALIMENT COMPLÉMENTAIRE EXTRUDÉ SOUS FORME DE CROQUETTE, EN PARTICULIER ALIMENT COMPLÉMENTAIRE EXTRUDÉ SOUS FORME DE CROQUETTE POUR RUMINANT**
VERFAHREN ZUR HERSTELLUNG EINES EXTRUDIERTEN NAHRUNGSERGÄNZUNGSMITTELS IN FORM VON KROKETTEN, INSBESONDERE EXTRUDIERTES NAHRUNGSERGÄNZUNGSMITTEL IN FORM VON KROKETTEN FÜR WIEDERKÄUER
PROCESS FOR THE MANUFACTURE OF AN EXTRUDED FOOD SUPPLEMENT IN KIBBLE FORM, IN PARTICULAR AN EXTRUDED FOOD SUPPLEMENT IN KIBBLE FORM FOR A RUMINANT

(30) Priorité: 15.03.2017 BE 201705161; 15.03.2017 BE 201705160
(43) Date de publication de la demande: 19.09.2018
(73) Titulaire: Dumoulin, 5300 Seille (BE); Dumoulin, 8500 Kortrijk (BE); AVEVE, 3000 Leuven (BE)
(72) Inventeur: VANVOLSEM, Thibaut, 5380 Pontillas (BE); REUTER, Werner, 4761 Rocherath (BE)
(74) Mandataire: Calysta NV

(56) Documents cités:
- CN-A- 1 452 880
- FR-A1- 2 269 870
- GB-A- 1 505 930
- JP-A- H06 261 697
- US-A- 3 642 489
- US-A1- 2005 163 911

## Description

La présente invention se rapporte à un procédé de fabrication d'un aliment complémentaire extrudé sous forme de croquette, en particulier à un procédé de fabrication d'un aliment complémentaire extrudé sous forme de croquette pour ruminant, comprenant au moins une source d'azote non protéique, de l'amidon et de la cellulose.

Dans une ration alimentaire classique, les protéines fournissent les acides aminés essentiels et nécessaires pour le maintien des fonctions vitales, la croissance, la reproduction et, dans le cas des vaches laitières, la lactation. Les animaux non-ruminants ont un besoin indispensable d'acides aminés préformés (chaînes d'acides aminés, protéines) dans leur ration alimentaire tandis que, grâce à une population microbienne anaérobie importante et variée dans le rumen (bactéries, protozoaires et champignons), les ruminants sont à même, en plus des apports d'acides aminés directement sous forme de protéines, de synthétiser des acides aminés au départ d'azote non protéique (ANP) : on parle alors de la synthèse de protéines microbiennes. L'azote non protéique est soit l'azote des constituants azotés alimentaires qui n'est pas sous forme de protéine (acides aminés libres, aminés, amides, ...), soit de l'azote d'origine industrielle comme l'urée ou les sels ammoniacaux.

Les ruminants sont donc capables de digérer, d'exploiter et de valoriser différentes sources de matières azotées alimentaires, à savoir (1) les sources de matières azotées alimentaires sous forme de protéines et (2) les sources de matières azotées alimentaires non protéiques (azote non protéique - ANP). Les protéines alimentaires sont dégradées par les microorganismes du rumen d'abord en acides aminés puis en ammoniac (NH₃) et la dégradation de l'azote non protéique (ANP) contribue également à la formation de NH₃ dans le rumen. Plus particulièrement, les protéines alimentaires sont transformées en acides aminés puis subissent une fermentation jusqu'au stade de NH₃, alors que l'ANP est directement transformé en NH₃. L'ammoniac ainsi obtenu est utilisé par les microorganismes du rumen pour synthétiser leurs propres protéines dénommées protéines microbiennes, cette synthèse ne pouvant toutefois avoir lieu que si une quantité suffisante d'énergie (essentiellement générée par la fermentation d'hydrates de carbone présents dans la ration alimentaire) est disponible pour les microorganismes : il faut donc simultanément des matières azotées et des hydrates de carbone (énergie). Notons encore qu'environ 82% des bactéries du rumen se développerait uniquement avec du NH₃ comme source d'azote.

En résumé, la digestion ruminale est donc essentiellement d'origine microbienne puisque, lors d'une « phase hydrolytique », ce sont des enzymes microbiennes qui hydrolysent les polymères ingérés par les ruminants, dont les sources azotées sous forme de protéines, afin de donner lieu à des molécules plus courtes (monomères, oligomères courts). Une « phase fermentaire » a ensuite lieu durant laquelle les monomères et les polymères courts sont transformés en acides gras volatils (AGV) métabolisés dans le foie et dans les tissus du ruminant mais aussi en gaz (CO₂ et CH₄ essentiellement). En parallèle, des molécules d'ATP formées par voies métaboliques constituent le support énergétique indispensable au maintien, à l'entretien et à la croissance des microbes du rumen.

Dans le rumen, l'ammoniac (NH₃) constitue le produit ultime de la dégradation azotée, ce composé étant utilisé, comme indiqué plus haut, par les bactéries du rumen, d'une part pour leur croissance et, d'autre part, pour synthétiser des protéines microbiennes, essentiellement au départ de sources d'azote non protéique (ANP). Une partie des protéines microbiennes ainsi obtenue est catabolisée dans le rumen pour former à nouveau du NH₃ tandis que les protéines microbiennes non dégradées dans le rumen sont dirigées vers l'intestin où elles représentent la majeure partie des apports en acides aminés.

Il est important de mentionner que, lorsque la quantité de NH₃ est insuffisante dans le rumen pour les besoins des microorganismes, la digestibilité de la matière organique alimentaire tend à diminuer puisque les microorganismes ne disposent alors pas de suffisamment de NH₃ que pour synthétiser leurs propres protéines. Une quantité trop peu importante de NH₃ dans le rumen ne permet donc pas d'exploiter de façon optimale les propriétés particulières du rumen.

Par ailleurs, lorsqu'une quantité trop importante de NH₃ est présente dans le rumen, a lieu un gaspillage d'azote en parallèle avec une production métabolique excessive d'urée, ce qui peut aboutir à une intoxication de l'animal et, dans des cas extrêmes, à sa mort. Précisons que l'excès de NH₃ dans le rumen est partiellement absorbé par la paroi de ce dernier et transporté, via le sang (ammoniac sanguin) jusqu'au foie où il est transformé en urée. Cette urée est véhiculée dans le sang et est principalement excrétée par les reins (élimination par les urines) mais aussi par les cellules du pis pour se retrouver dans le lait produit. Cette opération de transformation de NH₃ en urée dans le foie exige de l'énergie et implique une consommation d'acides aminés. Il s'agit donc d'une situation contre-productive, l'excès de NH₃ étant coûteux en nutriments. En outre, chez le ruminant, le foie est sollicité à bien d'autres fonctions importantes pour la production comme par exemple la néoglucogenèse. Par conséquent, la détoxification de NH₃ en urée doit être minimisée autant que possible. Notons encore que l'urée peut aussi être retrouvée dans les sécrétions génitales où un excès peut perturber la nidation de l'embryon et dans le lait où un excès peut contribuer à l'apparition de mammite. D'autres problématiques sont encore rencontrées en cas d'un excès d'azote : fourbure, boiterie, alcalose (hypomagnésémie entrainant hypocalcémie et tétanie) et problèmes de fertilité (mortalité embryonnaire, métrite, avortement, retour tardif en chaleur, ...). Néanmoins, notons encore qu'une petite partie de l'urée est recyclée par la salive pour revenir dans le flux alimentaire.

De tout ceci, il ressort qu'une production de NH₃ dans le rumen a toujours lieu et que celle-ci y est tout à fait bénéfique à condition que, selon la littérature, la concentration moyenne en NH₃ dans le jus de rumen respecte certaines concentrations. Dans le jus de rumen, il est connu que la concentration minimale en NH₃ est de 50 mg/l et que la concentration optimale est de 150 mg/l. Au-delà de 150 mg/l, la digestibilité de la matière organique n'augmente plus. Il n'existe pas de définition de la quantité maximale de NH₃ dans le jus de rumen mais l'urémie sanguine ne peut pas dépasser 400 mg/l de sang. Sur base de ce constat, des études ont été menées afin d'optimiser les apports de sources de matières azotées dans le rumen, ceci afin que la concentration en NH₃ dans le jus de rumen soit la plus équilibrée possible et la plus constante possible, notamment en évitant que ne soient observés des pics de concentrations en NH₃ typiquement rencontrés directement et très rapidement suite à l'ingestion d'une ration alimentaire par les ruminants. Il est notamment avéré que les fluctuations naturelles de la concentration en NH₃ dans le rumen peuvent être néfastes pour la digestibilité des glucides, en particulier pour la digestibilité des fibres.

En ce sens, un aliment complémentaire pour ruminant, comprenant au moins une source d'azote non protéique et de l'amidon, a été développé et est décrit dans le document US3642489, cet aliment étant un aliment extrudé avec gélatinisation de l'amidon (processus physico-chimique consistant en l'hydrolyse des liaisons intermoléculaires de l'amidon en présence d'eau et de chaleur, permettant aux sites de liaisons hydrogène de se lier aux molécules d'eau et conférant les caractéristiques viscoélastiques de la pâte amidon-eau durant une étape de cuisson). Plus particulièrement, ce document divulgue un aliment qui permet d'assurer une libération progressive et différée d'urée (source d'azote non protéique) dans le rumen, c'est-à-dire, en final, un relargage progressif de NH₃ au départ de la source d'azote non protéique (urée), de l'énergie étant quant à elle apportée par l'intermédiaire notamment de l'amidon. Selon ce document antérieur, un tel aliment permettrait par ailleurs d'augmenter la synthèse de protéines microbiennes et réduirait les problématiques de toxicité liées à un excès de NH₃.

Malheureusement, un tel aliment selon l'état de la technique, même s'il permet un relargage progressif d'ammoniac au départ d'une source d'azote non protéique (par exemple au départ d'urée), n'est pas optimal en ce sens qu'il ne permet pas d'assurer que la concentration en NH₃ dans le jus de rumen est plus constante au cours du temps. En outre, avec un tel aliment selon l'état de la technique, sont toujours observés des pics de concentrations en NH₃ dans le rumen avec les inconvénients connexes tels qu'indiqués plus haut. Par ailleurs, il apparait que le procédé et que l'aliment obtenu selon le document US3642489 ne permet pas une application concrète au vu des nouvelles normes alimentaires d'usage pour établir une ration pour les ruminants.

Il existe donc un besoin de proposer un aliment complémentaire pour ruminant plus performant en termes de relargage progressif de NH₃ dans le rumen au départ d'une source de matières azotées, en particulier au départ d'une source d'azote non protéique, ceci afin d'assurer une concentration plus constante en NH₃ dans le rumen en y évitant les pics de concentrations en NH₃. En outre, il existe un besoin de pouvoir procurer un aliment/un aliment complémentaire pour ruminant adapté aux nouvelles normes alimentaires.
Le document GB 1505 930 décrit des compositions extrudées comprenant de l'azote non-protéique, une matière, telle que la pomme de terre ou le tapioca, comprenant de l'amidon et de la cellulose, ainsi que de la matière grasse ajoutée. Cependant, ces compositions ne sont pas obtenues par un procédé susceptible de fournir des croquettes bénéfiques à l'alimentation des ruminants.

Le document JPH06261697 décrit un mélange d'urée et d'amidon extrudé en conditions sèches. Cependant, ce document ne décrit pas l'ajout de matière grasse et les compositions ne sont pas obtenues par un procédé susceptible de fournir des croquettes bénéfiques à l'alimentation des ruminants.

Pour résoudre au moins en partie les problèmes de l'état de la technique, il est prévu suivant l'invention, un procédé de fabrication d'un aliment complémentaire extrudé sous forme de croquette comprenant au moins une source d'azote non protéique et de l'amidon tel qu'indiqué au début, caractérisé en ce qu'il comprend en outre 2 à 15% en poids, de préférence 4 à 6% en poids d'au moins une matière grasse ajoutée par rapport au poids total dudit aliment complémentaire, le dit aliment présente un poids spécifique inférieur ou égal à 515 kg/m³ et ledit amidon et/ou ladite cellulose sont présents dans une matière première ou dans un extrait d'une matière première ou dans un tourteau d'une matière première étant choisie dans le groupe constitué de l'orge, du rebulet d'orge, d'orge issu de malterie, de radicelles d'orge, de drêches d'orge, de son d'orge, du maïs, de drêches de maïs, de rafles de maïs, de rebulet de maïs, de son de maïs, de gluten feed de maïs, d'épis de maïs, de l'avoine, de rebulet d'avoine, de son d'avoine, de cosses d'avoine, de gruau d'avoine, du riz, du son de riz, de rebulet de riz, de drêches de riz, de germes de riz expeller, du seigle, de rebulet de seigle, de son de seigle, du sorgho, de l'épeautre, du son d'épeautre, des cosses d'épeautre, de rebulet d'épeautre, du triticale, du blé, de rebulet de blé, de son de blé, de blé issu de malterie, de drêches de blé, de gluten feed de blé, de babassu expeller, de camelina expeller, de cosses de cacao, de tourteau de cacao, de graines de coprah, de coprah expeller, de graines de cotton, de graines de cotton expeller, de tourteau de cotton, d'arachide, de tourteau d'arachide, d'arachide expeller, de graines de kapok, de kapok expeller, de graines de lin, de lin expeller, de son de moutarde, de graines de Niger, de graines de Niger expeller, de pulpes d'olive, de tourteau de palmiste, de graines de colza, de colza expeller, de tourteau de colza, de graines de carthame, de tourteau de carthame, de cosses de carthame, de graines de sésame, de sésame expeller, de cosses de sésame, de graines de soja, de soja expeller, de tourteau de soja, de cosses de soja, de graines de tournesol, de tournesol expeller, de tourteau de tournesol, de cosses de tournesol, de graines de chanvre, de chanvre expeller, d'huile de chanvre, de caroube, de gousses de caroube, de féverole, de cosses de féverole, de tourteau de guar, de lentille, de cosses de lentille, de lupin, de cosses de lupin, de pulpe de lupin, de rebulet de lupin, de pois, de son de pois, de cosses de pois, de rebulet de pois, de pulpe de pois, de pulpes de betterave, de carottes, de pelures de carotte, de racines de carotte, de pulpes de carotte, de racines de chicorée, de mélasse de chicorée, de pulpes de chicorée, de pulpes d'oignons, d'oignons fris, de pelures de pomme de terre, de pulpes de pomme de terre, de flocons de pomme de terre, de boutures de pomme de terre, de glands, de coque de gland, d'amandes, de coques d'amande, de pulpes de pommes, de mélasses de pomme, de sarrasin, de son et balles de sarrasin, de rebulet de sarrasin, de châtaignes, de pulpes d'agrumes, de coques de café, de dattes, de pulpes de fruits, de cresson, de pépins de raisins, de tourteaux de pépins de raisins, de pulpes de raisins, de pulpes de tomates, de luzerne, de millet, de manioc, de patate douce, de panais, de topinambour, d'igname, de taro, de citrouille, de tapioca, de noix de cajou, de graines de lotus, de pistache, de niébé, de banane, de banane plantain et de leurs mélanges.

Par les termes « au moins une matière grasse ajoutée », il est entendu, au sens de la présente invention, une matière grasse autre que celle déjà présente dans les autres constituants de l'aliment complémentaire, en particulier une matière grasse autre que celle apportée au travers d'une matière première, d'un extrait d'une matière première ou d'un tourteau d'une matière première faisant partie de l'aliment complémentaire, plus particulièrement une matière grasse autre que celle apportée au travers d'une matière première, d'un extrait d'une matière ou d'un tourteau d'une matière première permettant d'assurer l'apport en amidon et/ou en cellulose dans l'aliment complémentaire.

Dans le cadre de la présente invention, il a été montré qu'un tel aliment obtenu suivant l'invention permet d'optimiser plus encore les apports en azote. Plus particulièrement, il a été montré qu'un aliment complémentaire selon l'invention optimise les apports en azote non protéique mais aussi les relargages et les apports en NH₃ au départ d'une source d'ANP (le NH₃ étant le produit de dégradation direct de l'ANP), de telle sorte que n'aient plus lieu ni des surplus ni des pénuries de NH₃ dans le rumen. Un aliment complémentaire selon l'invention a en outre été déterminé comme étant un aliment complémentaire permettant de maximiser la période de temps durant laquelle la concentration en NH₃ dans le jus du rumen est optimale.

Plus spécifiquement, il a été déterminé, qu'avec un aliment complémentaire obtenu suivant l'invention, un relargage progressif et différé d'azote sous forme de NH₃ a lieu dans le rumen durant plusieurs heures au départ d'une source en azote non protéique. Ceci s'explique par le fait que, de façon surprenante, l'aliment complémentaire extrudé sous forme de croquette selon l'invention comprenant au moins une source d'azote non protéique, de l'amidon, de la cellulose et au moins une matière grasse ajoutée selon les quantités en poids mentionnées ci-dessus, est un aliment complémentaire présentant une flottabilité lui permettant de véritablement surnager dans la partie supérieure du liquide ruminal. L'aliment complémentaire extrudé sous forme de croquette obtenu selon l'invention donne ainsi lieu à une durée de réhydratation et de désagrégation qui est significativement augmentée par rapport à un aliment classique. Il en résulte un délitement lent et progressif de l'aliment complémentaire extrudé sous forme de croquette suivant l'invention, la source d'ANP (par exemple de l'urée) qui y est piégée donnant lieu à un relargage de NH₃ stable, continu, contrôlé et progressif dans le rumen. En particulier, la forme extrudée de l'aliment complémentaire comprenant de l'ANP, de l'amidon, de la cellulose et de la matière grasse ajoutée selon l'invention, assure sa flottabilité dans le rumen mais aussi le piégeage de l'ANP dans une structure d'amidon (par création de liaisons physiques entre l'ANP, par exemple de l'urée, et l'amidon). De ceci, il résulte qu'une libération progressive et lente de NH₃ au cours du temps est observée pour un aliment complémentaire selon l'invention, les microorganismes du rumen étant alors à même de capter et d'utiliser de façon optimale le NH₃ dont la concentration dans le rumen est optimale et stable au cours du temps sans que n'aient lieu des pics de concentration en NH₃.

Grâce à cette libération lente et progressive de NH₃, les surplus et les carences en NH₃ dans le rumen sont évités et la flore ruminale digère d'autant mieux les rations ingérées dès lors que les microorganismes du rumen sont plus efficaces de façon continue, ceci donnant lieu à une production appréciable et augmentée de protéines microbiennes au départ d'azote non protéique. Par ailleurs, puisque les apports azotés sont mieux gérés (consommation optimale des sources d'azote), les rejets azotés liés aux élevages bovins sont significativement réduits dans l'environnement. Un poids spécifique tel que spécifié dans le cadre de la présente invention, permet d'assurer plus encore la flottabilité de l'aliment complémentaire.

Avantageusement, dans l'aliment obtenu selon l'invention, ladite au moins une source d'azote non protéique est présente en une quantité en poids inférieure ou égale à 30%, de préférence inférieure ou égale à 20% par rapport au poids total dudit aliment complémentaire.

De préférence, dans l'aliment obtenu selon l'invention, ledit amidon est présent en une quantité en poids supérieure ou égale à 10%, de préférence supérieure ou égale à 15%, préférentiellement supérieure ou égale à 20%, plus préférentiellement supérieure ou égale à 25% par rapport au poids total dudit aliment complémentaire.

Avantageusement, dans l'aliment obtenu selon l'invention, ladite cellulose est présente en une quantité en poids comprise entre 5 à 15% par rapport au poids total dudit aliment complémentaire.

De préférence, l'aliment complémentaire extrudé selon l'invention se présente sous forme de croquette présentant un diamètre compris entre 3 et 8 mm et une longueur comprise entre 5 et 20 mm.

Avantageusement, l'aliment complémentaire extrudé sous forme de croquette selon l'invention présente un poids spécifique de préférence inférieur ou égal à 500 kg/m³. Un tel poids spécifique a été déterminé, dans le cadre de la présente invention, comme permettant d'assurer plus encore la flottabilité de l'aliment complémentaire.

De préférence, l'aliment complémentaire extrudé sous forme de croquette selon l'invention présente une dureté de granulé KAHL supérieure ou égale à 11 kg/cm². Une telle dureté a été déterminée, dans le cadre de la présente invention, comme permettant d'assurer un délitement d'autant plus lent de l'aliment complémentaire.

Préférentiellement, l'aliment complémentaire extrudé sous forme de croquette selon l'invention présente une teneur en poids d'eau inférieure ou égale à 8,5%, de préférence inférieure ou égale à 8% par rapport au poids total dudit aliment complémentaire.

Avantageusement, l'aliment complémentaire extrudé sous forme de croquette selon l'invention présente une teneur comprise entre 15 et 100% d'équivalent protéine brute totale. Notons que l'équivalent protéine brute totale est défini par la concentration en azote dans l'aliment multipliée par un facteur 6,25.

De préférence, dans l'aliment obtenu selon l'invention, ladite au moins une source d'azote non protéique est choisie dans le groupe constitué de l'azote, du biuret, de l'éthylène urée, du phosphate d'ammonium, du bicarbonate d'ammonium, du chlorure d'ammonium, du sulfate d'ammonium, du carbonate d'ammonium, du carbamate d'ammonium, du citrate d'ammonium, du formate d'ammonium, de l'acétate d'ammonium, du propionate d'ammonium, du lactate d'ammonium, du succinate d'ammonium, du fumarate d'ammonium, du malate d'ammonium, du phosphate de diammonium, du propionamide, du butyramide, du formamide, de l'acétamide, de la créatine, de la créatinine, et de leurs mélanges.

De façon préférée, dans l'aliment obtenu selon l'invention, ladite au moins une matière grasse ajoutée est choisie dans le groupe constitué de l'huile de palme, de l'huile de colza, de l'huile de lin, de l'huile de soja, de l'huile de canola, de l'huile de maïs, de l'huile de tournesol, de l'huile d'olives, des autres huiles végétales et de leurs mélanges.

D'autres formes de réalisation d'un aliment complémentaire extrudé sous forme de croquette suivant l'invention sont indiquées dans les revendications annexées.

Il est en outre entendu que toutes les définitions et préférences, telles que décrites ci-dessus, s'appliquent également à tous les autres modes de réalisation, comme décrit ci-dessous.

L'invention porte donc sur un procédé de fabrication dudit aliment complémentaire extrudé sous forme de croquette selon l'invention, en particulier sur un procédé de fabrication dudit aliment complémentaire extrudé sous forme de croquette pour ruminant selon l'invention, comprenant :
- un étape de mélange pour obtenir un premier mélange contenant au moins ledit amidon comme détaillé ci-dessus, ladite cellulose comme détaillé ci-dessus et ladite au moins une matière grasse ajoutée comme détaillé ci-dessus,
- une étape de broyage dudit premier mélange avec formation d'un premier mélange broyé,
- une étape d'addition de ladite au moins une source d'azote non protéique audit premier mélange broyé avec formation d'un deuxième mélange,
- une étape de conditionnement par précuisson, ladite étape de conditionnement par précuisson étant une étape de conditionnement par précuisson dudit deuxième mélange,
- une étape d'extrusion, ladite étape d'extrusion étant une étape d'extrusion dudit deuxième mélange précuit, et
- une étape de séchage et de refroidissement.

Dans le cadre de la présente invention, si l'amidon et la cellulose sont mélangés et broyés simultanément pour obtenir un premier mélange broyé, la source d'ANP est quant à elle ajoutée par la suite à ce premier mélange broyé pour former un deuxième mélange : par conséquent, dans ce deuxième mélange, la source d'ANP n'est pas broyée. Ce deuxième mélange composé de cellulose et d'amidon broyés et d'au moins une source d'ANP non broyée sera alors soumis à une étape de conditionnement par précuisson et à une étape d'extrusion pour finalement donner lieu à un aliment complémentaire extrudé sous forme de croquette. De façon inattendue, il été déterminé, dans le cadre de la présente invention, qu'une étape d'addition, d'au moins une source d'ANP non broyée dans un premier mélange broyé d'amidon et de cellulose permet de mettre en oeuvre des quantités en poids supérieure à 9% d'ANP par rapport au poids total défini par l'ensemble des constituants de l'aliment complémentaire sans que n'ait lieu une prise en masse de la farine (du broyat) avant extrusion ni un phénomène de collage entre les fractions (grains) d'amidon, de cellulose et d'ANP. En outre, selon la présente invention, il a été montré que la source d'ANP non broyée (par exemple sous forme de granulés ou de billes) ajoutée au premier mélange pour former un deuxième mélange, va se solubiliser et « fondre » dans ce deuxième mélange lors de l'étape de conditionnement par précuisson et/ou lors de l'étape d'extrusion de telle sorte à y être répartie de façon homogène.

Plus spécifiquement, le procédé selon l'invention repose sur une extrusion par voie humide qui peut être subdivisée en trois étapes, à savoir (1) une étape de conditionnement par précuisson, (2) une étape d'extrusion proprement dite et (3) une étape de séchage et de refroidissement. L'objectif de l'étape de conditionnement par précuisson est de précuire la farine par voie humide par ajout d'eau et de vapeur avant le passage dans l'extrudeur : à la sortie du conditionneur, le deuxième mélange est humide et chaud (humidité variant de 15 à 25% et température oscillant entre 95 et 100°C).

L'étape d'extrusion poursuit la cuisson en exerçant une pression sur le produit : les forces de friction exercées au sein de l'extrudeur ont pour conséquence non seulement de poursuivre la cuisson mais aussi de gélatiniser l'amidon et de permettre une expansion du produit à la sortie de l'extrudeur. L'étape d'extrusion va plus particulièrement permettre de gélatiniser l'amidon, ce qui, comme indiqué plus haut, consiste en l'hydrolyse des liaisons intermoléculaires de l'amidon en présence d'eau et de chaleur, permettant aux sites de liaisons hydrogène de se lier aux molécules d'eau et conférant les caractéristiques viscoélastiques de la pâte amidon-eau durant une étape de cuisson. Par ailleurs, à la sortie des chambres de compression de l'extrudeur, l'amidon va se structurer pour créer un produit contenant des cavités pouvant renfermer de l'air.

A la sortie de l'extrudeur a lieu une étape de séchage et de refroidissement puisque le produit extrudé est humide et chaud en sortie de l'extrudeur. Notons que, entre le conditionneur et l'extrudeur, le deuxième mélange chaud et humide est en mouvement permanent : c'est un flux continu du deuxième mélange qui alimente l'extrudeur, un espace de chute d'environ un mètre entre le conditionneur et l'extrudeur étant respecté pour éviter toute agglomération du deuxième mélange après précuisson.

Avantageusement, selon le procédé suivant l'invention, ladite étape de broyage donne lieu à un mélange broyé sous forme d'une farine dont 70% des particules présentent une taille comprise entre 0,5 et 1 mm.

De préférence, selon le procédé suivant l'invention, ladite étape d'addition d'au moins une source d'azote non protéique est une étape d'addition d'au moins une source d'azote non protéique sous forme de granulés, de farine, de poudre, de paillettes ou de billes présentant une taille moyenne comprise entre 0,25 et 5 mm, de préférence une taille moyenne comprise entre 0,5 et 3 mm, préférentiellement une taille moyenne comprise entre 1 et 2 mm.

Avantageusement, le procédé suivant l'invention comprend, lors de ladite étape de mélange pour obtenir un premier mélange, une addition d'au moins une matière grasse ajoutée en une quantité en poids comprise entre 1 et 7% en poids par rapport au poids total dudit premier mélange. Par les termes « au moins une matière grasse ajoutée », il est entendu, au sens de la présente invention, une matière grasse autre que celle déjà présente dans les autres constituants du premier mélange, en particulier une matière grasse autre que celle apportée au travers d'une matière première, d'un extrait d'une matière première ou d'un tourteau d'une matière première faisant partie du premier mélange, plus particulièrement une matière grasse autre que celle apportée au travers d'une matière première, d'un extrait d'une matière ou d'un tourteau d'une matière première permettant d'assurer l'apport en amidon et/ou en cellulose dans le premier mélange.

Notons qu'il existe des sources d'azote non protéique enrobée d'une matière grasse, comme par exemple le produit Optigen^{®} de la société Alltech. Toutefois, une source d'azote non protéique enrobée d'une matière grasse ne peut pas faire partie d'un mélange subissant un conditionnement par précuisson et une extrusion car la matière grasse serait perdue un fois son point de fusion atteint : ce type d'additif ne peut donc pas être ajouté dans un procédé de fabrication de granulés où la température atteint 50 à 90°C. Cependant, il a été montré que le procédé suivant l'invention permet avantageusement d'opérer un ajout d'au moins une matière grasse ajoutée dans un mélange qui est ensuite soumis à des étapes de conditionnement par précuisson et d'extrusion, de telle sorte qu'au moins une partie la matière grasse ajoutée va agir comme agent enrobant la matrice composée d'amidon et d'au moins une source d'azote non protéique : la matière grasse ajoutée va ralentir la dissolution de la croquette et, in fine, ralentir la libération de l'azote non protéique.

Dans le cadre de la présente invention, il a été montré qu'un tel ajout de matière grasse ajoutée permet d'optimiser plus encore les apports en azote. Plus particulièrement, il a été montré qu'un aliment complémentaire obtenu via le procédé selon l'invention, et plus particulièrement qu'un aliment complémentaire obtenu via le procédé selon l'invention avec addition de matière grasse ajoutée, optimise les apports en azote non protéique mais aussi les relargages et les apports en NH₃ au départ d'une source d'ANP (le NH₃ étant le produit de dégradation direct de l'ANP), de telle sorte que n'aient plus lieu ni des surplus ni des pénuries de NH₃ dans le rumen. Un aliment complémentaire obtenu via le procédé selon l'invention, et plus particulièrement un aliment complémentaire obtenu via le procédé selon l'invention avec addition de matière grasse ajoutée, a en outre été déterminé comme étant un aliment complémentaire permettant d'approcher l'optimum de concentration ammoniacale de 150 mg/l dans le jus du rumen et de maintenir cet optimum constant au cours du temps.

Plus spécifiquement, il a été déterminé, qu'avec un aliment complémentaire obtenu via le procédé selon l'invention, et plus particulièrement qu'avec un aliment complémentaire obtenu via le procédé selon l'invention avec addition de matière grasse ajoutée, un relargage progressif et différé d'azote sous forme de NH₃ a lieu dans le rumen durant plusieurs heures au départ d'une source en azote non protéique. Ceci s'explique par le fait que l'aliment complémentaire extrudé sous forme de croquette obtenu suivant le procédé selon l'invention présente une flottabilité lui permettant de véritablement surnager à la surface du jus du rumen, ce qui donne lieu à une durée de réhydratation et de désagrégation de l'aliment complémentaire qui est significativement augmentée par rapport à un aliment complémentaire classique. Il en résulte un délitement lent et progressif de l'aliment complémentaire extrudé sous forme de croquette obtenu via le procédé selon l'invention, en particulier de l'aliment complémentaire obtenu via le procédé selon l'invention avec addition de matière grasse ajoutée, la source d'ANP (par exemple de l'urée) qui y est piégée donnant ainsi lieu à un relargage de NH₃ stable, continu, contrôlé et progressif dans le rumen.

En particulier, la forme extrudée de l'aliment complémentaire obtenu via le procédé selon l'invention comprenant de l'ANP, de l'amidon, de la cellulose et de la matière grasse ajoutée selon l'invention, assure sa flottabilité dans le rumen mais aussi le piégeage de l'ANP dans une structure d'amidon (par création de liaisons physiques entre l'ANP, par exemple de l'urée, et l'amidon). De ceci, il résulte qu'une libération progressive et lente de NH₃ au cours du temps est observée, les microorganismes du rumen étant alors à même de capter et d'utiliser de façon optimale le NH₃ dont la concentration dans le rumen est optimale et stable au cours du temps sans que n'aient lieu des pics de concentration en NH₃. Grâce à cette libération lente et progressive de NH3, les surplus et les carences en NH₃ dans le rumen sont évités et la flore ruminale digère d'autant mieux les rations ingérées dès lors que les microorganismes du rumen sont plus efficaces de façon continue, ceci donnant lieu à une production appréciable et augmentée de protéines microbiennes au départ d'azote non protéique. Par ailleurs, puisque les apports azotés sont mieux gérés (consommation optimale des sources d'azote), les rejets azotés liés aux élevages bovins sont significativement réduits dans l'environnement.

De préférence, selon le procédé suivant l'invention, ladite étape de mélange pour obtenir un premier mélange met en oeuvre une quantité en poids d'amidon comprise entre 10 et 35% par rapport au poids total dudit premier mélange.

Avantageusement, selon le procédé suivant l'invention, ladite étape de mélange pour obtenir un premier mélange met en oeuvre une quantité en poids de cellulose comprise entre 5 et 15% par rapport au poids total dudit premier mélange.

Préférentiellement, selon le procédé suivant l'invention, ladite étape de conditionnement par précuisson est réalisée par injection d'eau et/ou de vapeur d'eau à une température comprise entre 90 et 120°C dans ledit deuxième mélange pendant une période de temps comprise entre 1 et 10 minutes, préférentiellement 3 minutes.

Avantageusement, selon le procédé suivant l'invention, ladite étape d'extrusion est réalisée par injection d'eau et/ou de vapeur d'eau dans ledit deuxième mélange à une température comprise entre 100 et 150°C et à une pression comprise entre 15 et 25 Pa pendant une période de temps comprise entre 30 et 50 secondes.

De préférence, selon le procédé suivant l'invention, ladite étape d'addition d'au moins une source d'azote non protéique audit premier mélange broyé avec formation d'un deuxième mélange met en oeuvre une quantité en poids d'au moins une source d'azote non protéique comprise inférieure ou égale à 30% par rapport au poids total dudit deuxième mélange.

De façon préférée, selon le procédé suivant l'invention, lesdites étapes de conditionnement par précuisson et d'extrusion sont des étapes de conditionnement par précuisson et d'extrusion formant des croquettes extrudées présentant une teneur en poids d'eau inférieure ou égale à 8,5%, de préférence inférieure ou égale à 8% par rapport au poids total dudit aliment complémentaire.

D'autres formes de réalisation du procédé suivant l'invention sont indiquées dans les revendications annexées.

L'invention a aussi pour objet un aliment complémentaire extrudé sous forme de croquette obtenu selon le procédé suivant l'invention.

D'autres formes de réalisation d'un aliment complémentaire extrudé sous forme de croquette obtenu selon le procédé suivant l'invention sont indiquées dans les revendications annexées. Il est aussi décrit, sans ce soit compris dans la présente inventior une ration alimentaire, en particulier une ration alimentaire pour un ruminant, comprenant un aliment de base et un aliment complémentaire extrudé sous forme de croquette obtenu selon le procédé suivant l'invention.

D'autres formes de réalisation d'une ration alimentaire, en particulier une ration alimentaire pour un ruminant, comprenant un aliment de base et un aliment complémentaire extrudé sous forme de croquette obtenu selon le procédé suivant l'invention sont décrites, bien que ne faisant pas partie du cadre de l'invention.

Il est aussi décrit, sans ce soit compris dans la présente inventior une utilisation d'une ration alimentaire comprenant un aliment de base et un aliment complémentaire extrudé sous forme de croquette obtenu selon le procédé suivant l'invention pour nourrir un ruminant, en particulier pour nourrir un bovin et plus particulièrement pour nourrir une vache laitière.

Il est aussi décrit, sans ce soit compris dans la présente invention, une utilisation d'un aliment complémentaire extrudé sous forme de croquette obtenu selon le procédé suivant l'invention comme complément d'une ration de base, en particulier comme complément à une ration de base pour un ruminant.

D'autres formes d'utilisation d'une ration alimentaire comprenant un aliment de base et un aliment complémentaire extrudé sous forme de croquette ou d'un aliment complémentaire extrudé sous forme de croquette obtenu selon le procédé suivant l'invention pour nourrir un ruminant sont décrites, bien que n'étant pas comprises dans le cadre de la présente invention.

D'autres caractéristiques, détails et avantages de l'invention ressortiront des exemples donnés ci-après, à titre non limitatif et en faisant référence aux figures annexés.

Il a été montré également dans le cadre de la présente invention, que le procédé suivant l'invention permet avantageusement qu'au moins une partie la matière grasse ajoutée va agir comme agent enrobant la matrice composée d'amidon et d'au moins une source d'azote non protéique : la matière grasse ajoutée va ralentir la dissolution de la croquette et, in fine, ralentir la libération de l'azote non protéique.

D'autres formes de réalisation d'un procédé suivant l'invention sont indiquées dans les revendications annexées.

D'autres caractéristiques, détails et avantages de l'invention ressortiront des exemples donnés ci-après, à titre non limitatif et en faisant référence aux figures annexés.
La figure 1 est un graphique qui illustre les effets de différentes formes d'un aliment complémentaire (farine, croquette moulue, croquette entière) sur la cinétique de libération de NH₃ dans le rumen.
La figure 2 est un graphique qui illustre la dégradabilité apparente de la matière sèche dans le rumen (test de dégradation in sacco) pour différents aliments complémentaires dont un aliment complémentaire obtenu par le procédé de l'invention.
La figure 3 est un graphique qui illustre la dégradabilité apparente de la matière azotée totale dans le rumen (test de dégradation in sacco) pour différents aliments complémentaires dont un aliment complémentaire obtenu par le procédé de l'invention.
La figure 4 est un graphique qui illustre la dégradabilité apparente de l'urée dans le rumen (test de dégradation in sacco) pour pour différents aliments complémentaires dont un aliment complémentaire obtenu par le procédé de suivant l'invention

### Exemples

**Remarque:** l'invention est limitée au procédé revendiqué. Ainsi, dans ce qui suit la dénomination "selon l'invention" doit être comprise "obtenu selon le procédé de l'invention".

### 1. Effet de différentes formes d'un aliment complémentaire sur la cinétique de libération de NH₃ dans le rumen

Un premier essai a été mené afin de tester in vivo, sur des vaches fistulisées au niveau ruminal, l'effet de différentes formes d'un aliment complémentaire sur la cinétique de libération de NH₃ dans le rumen. Un même aliment complémentaire mais sous différentes formes a donc été utilisé et est composé comme suit : 37% de blé, 32% de tourteau de tournesol, 16% de tourteau de colza, 11% d'urée (source d'ANP) et 4% d'huile de palme. L'incorporation de cet aliment complémentaire a été réalisée à un niveau élevé pour juger de la cinétique de libération du NH₃ dans le rumen.

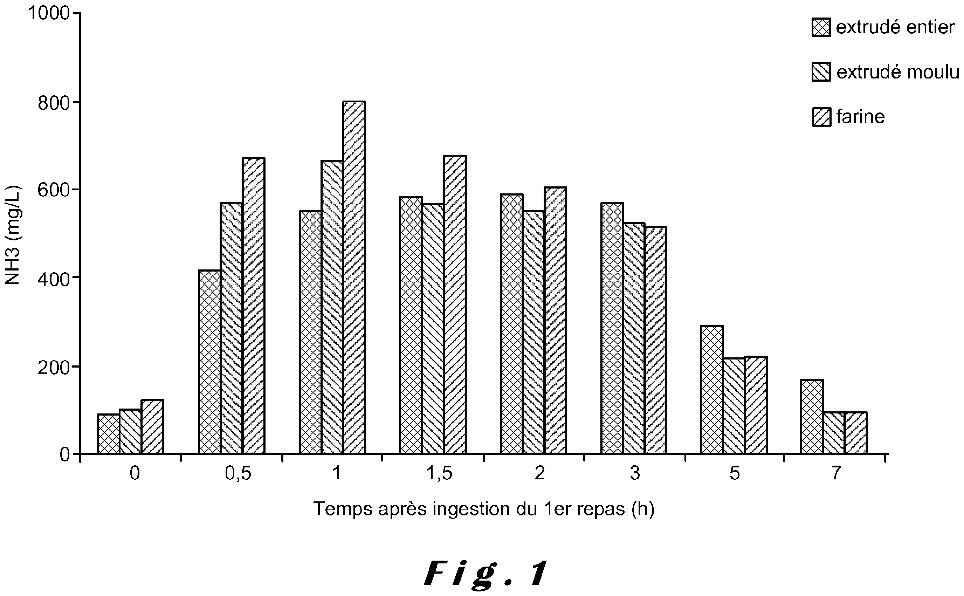

Les différentes formes testées de cet aliment complémentaire sont les suivantes :
a) un aliment complémentaire sous forme d'une farine (avant extrusion) (« farine » à la figure 1),
b) un aliment complémentaire extrudé sous forme de croquette (« extrudé entier » à la figure 1), et
c) un aliment complémentaire extrudé sous forme de croquette mais ensuite moulu (« extrudé moulu » à la figure 1).

Un protocole expérimental spécifique a été mis en place sur 3 vaches Holstein de 500 kg à l'entretien durant une période de 7 jours :
- 4 jours d'adaptation :
   - le matin : 1 kg d'extrudé entier mélangé à 4 kg de matière sèche d'ensilage de maïs ; et
   - le soir : foin à volonté ;
- 3 jours de régime spécifique :
   - le matin: 1^{er} repas = 1 kg de la forme d'aliment complémentaire a), b) ou c) à tester à mélanger à 2 kg de matière sèche de maïs ensilage et 2^{ème} repas (après ingestion complète du 1^{er}) = distribution de 2 kg d'ensilage de maïs,
   - le soir : 6 kg de foin.

Des prélèvements de jus de rumen ont été réalisés les deux derniers jours de chaque période selon le timing suivant : juste avant le 1^{er} repas (T0), après 30 minutes, après 1 heure, après 1 heure et 30 minutes, après 2 heures, après 3 heures, après 5 heures et après 7 heures suite au début du 1^{er} repas.

Les résultats obtenus sont présentés à la figure 1 et mettent en avant des cinétiques différentes de libération de l'ammoniac (NH₃) dans le rumen selon les différentes formes de l'aliment complémentaire testé. Ainsi, comme on peut le constater, après 30 minutes de présence dans le jus du rumen, un aliment complémentaire sous forme d'une farine (avant extrusion), libère l'ammoniac beaucoup plus rapidement que la forme de croquette moulue (« extrudé moulu ») et encore plus rapidement que la forme de croquette (non moulue = « extrudé entier »). Une observation identique est faite après une heure de présence dans le jus du rumen, les formes « farine » et « extrudé moulu » donnant lieu à des concentrations en NH₃ (mg/L) significativement plus élevée dans le rumen. Dans cette expérience, les valeurs élevées d'incorporation de l'urée alimentaire et les valeurs très élevées de concentration en NH₃ n'ont qu'un seul but poursuivi : mettre en évidence les différences de cinétique de libération du NH₃ dans le jus de rumen.

Par ailleurs, une différence entre « extrudé entier » (croquette) et « extrudé moulu » a été nettement observée : dans la première heure, la différence relative de teneur en ammoniac entre « extrudé moulu » et « extrudé entier » est de 22,9% (85,4-62,5) à 30 minutes et de 14,2% (83,2-69,0) à 60 minutes. Notons qu'après 90 minutes, les 3 formes se stabilisent au même niveau de concentration en NH₃ (mg/L) dans le rumen mais qu'à 5 et 7 heures, le taux d'ammoniac maintenu dans le rumen est supérieur pour l'« extrudé entier ».

De tout ceci, il ressort qu'un aliment complémentaire extrudé sous forme de croquette (« extrudé entier ») va générer une différence fondamentale au niveau de la libération de NH₃ durant la première heure de présence dans le rumen, cette première heure étant cruciale puisque c'est durant cette période de temps que se réalise le gaspillage d'excès d'ammoniac NH₃ suite à l'ingestion du bol alimentaire. En effet, le pic d'ammoniac NH₃ dégagé durant cette période de temps ne peut pas trouver une flore ruminale capable de valoriser cet ammoniac et il est alors perdu et recyclé par les voies hépatiques et perdu essentiellement dans les urines. L'aliment complémentaire extrudé sous forme de croquette (« extrudé entier ») permet d'éviter les pics de NH₃ et permet d'assurer une concentration constante en NH₃ dans le rumen au cours du temps.

### 2. Dégradabilité d'aliments complémentaires dans le rumen - essais comparatifs

Des essais in-vivo et in-sacco ont été réalisés afin de déterminer les paramètres suivants au cours de la première heure de digestion pour différents aliments complémentaires, dont un aliment complémentaire suivant l'invention :
a) la dégradabilité apparente de la matière sèche (MS) dans le rumen,
b) la dégradabilité apparente de la matière azotée totale (MAT) dans le rumen,
c) la dégradabilité apparente de l'urée dans le rumen.

L'aliment complémentaire testé et correspondant à un aliment complémentaire suivant l'invention est composé comme suit : 37% de blé, 32% de tourteau de tournesol, 16% de tourteau de colza, 11% d'urée (source d'ANP) et 4% d'huile de palme. Un tel aliment complémentaire présente une teneur en poids de 52% de matière azotée totale (MAT) dont 30,8% sont issus des 11% d'urée et 21,2% sont issus des matières premières (tourteau de colza, tourteau de tournesol et blé).

Un tel aliment complémentaire comprend une quantité en poids de 5,17% d'ANP, une quantité en poids de 24% d'amidon, une quantité en poids de 8,7% en cellulose et une quantité en poids de 4% de matière grasse ajoutée par rapport au poids total dudit aliment complémentaire. Ces quantités en poids sont déterminées au départ des tables du CVB (Central Bureau Livestock Feeding, Pays-Bas) établies en 2016.

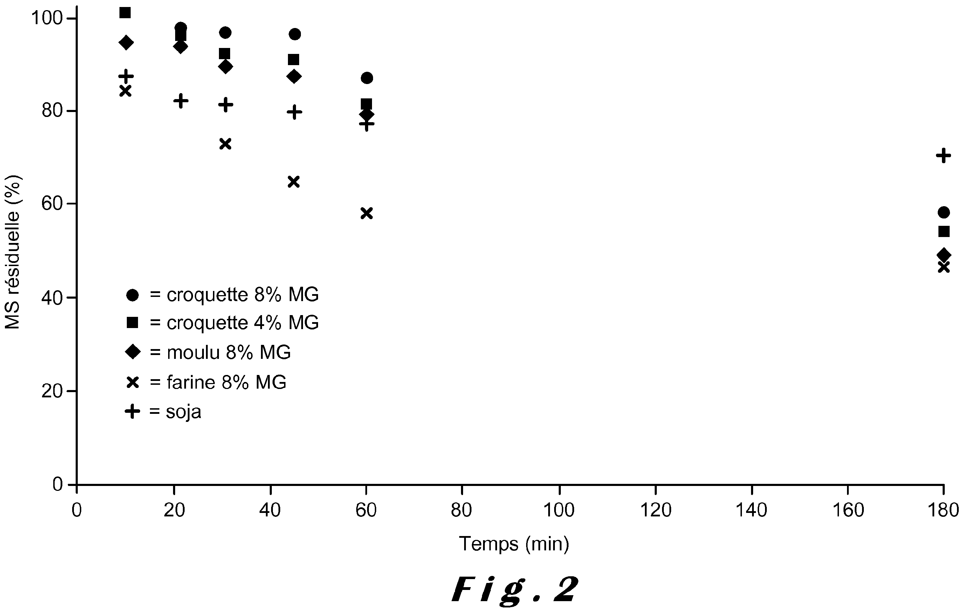

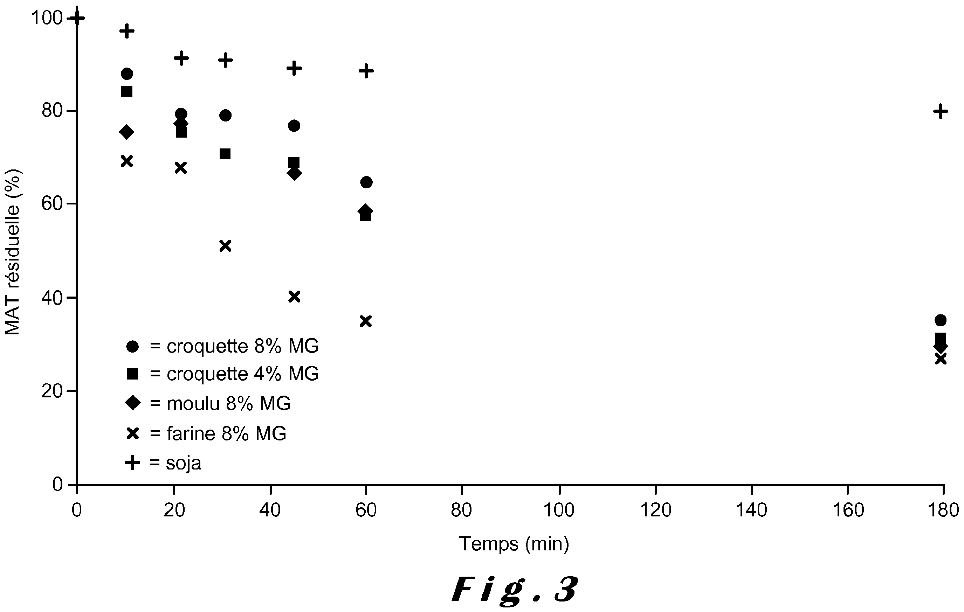

Plus particulièrement, les essais in-vivo ont été réalisés sur 2 vaches fistulisées (vaches à l'entretien, Holstein de 500 kg) durant 2 jours consécutifs afin de mesurer l'évolution au cours du temps des aliments complémentaires suivants :
1. farine d'un aliment complémentaire dont la composition est identique à celle décrite ci-dessus (poids spécifique de 630 kg/m³) (« farine 8% MG » aux figures 2 à 4);
2. croquette d'un aliment complémentaire extrudé dont la composition est identique à celle décrite ci-dessus (aliment complémentaire selon l'invention) (dureté de 12 kg/cm² et poids spécifique de 495 kg/m³) (« croquette 8% MG » aux figures 2 à 4);
3. forme moulue d'une croquette d'un aliment complémentaire extrudé dont la composition est identique à celle décrite ci-dessus (poids spécifique de 585 kg/m³) (« moulu 8% MG » aux figures 2 à 4);
4. croquette d'un aliment complémentaire extrudé dont la composition est identique à celle décrite ci-dessus mais sans huile de palme, c'est-à-dire sans matière grasse ajoutée (dureté de 11 kg/cm² et poids spécifique de 485 kg/m³) (« croquette 4% MG » aux figures 2 à 4 - notons que cette forme d'aliment complémentaire est la plus proche de celle qui pourrait être obtenue selon le document US3642489 bien que, dans ce document, aucune différentiation n'est établie entre une forme moulue ou une forme de croquette) ;
5. tourteau de soja seul présentant une teneur en poids de protéine de 46% et une teneur en poids de matière grasse de 2% (« soja » aux figures 2 et 3). Le tourteau de soja étant la source de protéines la plus utilisée chez les vaches laitières actuellement, les essais réalisés avec ce tourteau servent de référence afin de valider le bon fonctionnement du rumen des vaches à l'entretien sur lesquelles sont testés les aliments complémentaires.

Afin de réaliser ces essais (dits essais de cinétique de dégradation *in sacco*), les aliments complémentaires testés ont été placés, à raison de 15 g en poids, dans des sachets en nylon spécifiques (Ankom.r1020.foragebag-50 µm de porosité, 10*20) eux-mêmes placés ensuite dans le rumen et retirés ensuite après un temps d'incubation donné, soit après 10, 20, 30, 45 60 ou 180 minutes. Pour chacune des vaches fistulisées, pour chaque aliment et pour chaque durée, deux répétitions ont été réalisées : 120 sachets en nylon ont donc été préparés et incubés au total.

Les essais in-sacco ont été réalisés sur 2 vaches canulées de race Holstein. Les vaches ont reçu pour seule ration, de l'ensilage d'herbe préfanée. Afin de réhabituer leur rumen à recevoir des composés riches en azote et en énergie, les vaches utilisées reçoivent, les 5 jours précédent l'expérience in sacco, des quantités croissantes d'un aliment complémentaire (300, 350, 400, 450 et 450 grammes la veille). Ce préconditionnement permet d'avoir des vaches dont la composition du rumen se rapproche le plus possible de celle des vaches laitières en production.

Les vaches utilisées pour les essais in-sacco n'ont plus accès à la nourriture le soir avant l'expérience du lendemain, cela afin que le rumen ne soit pas trop rempli au moment de l'expérience pour faciliter le dépôt des sachets dans le rumen. Les 5 sachets (contenant chacun un des 5 aliments tels qu'indiqués ci-dessus) à retirer ensemble après chaque durée d'incubation sont regroupés et attachés grâce à un filet. Le filet est refermé et relié à une corde pour faciliter le retrait du rumen. Six grands sacs (correspondant aux 6 temps de trempage) sont placés chacun à leur tour (à 30 secondes d'intervalle) dans le fond du rumen (dans la partie la plus liquide). Une fois tous les sacs mis en place, la vache reçoit 3 kg de préfané (ensilage d'herbe). Cette quantité de préfané lui permet d'avoir une activité microbienne normale sans pour autant compliquer le retrait des sachets ensuite. Les grands sacs sont retirés aux temps appropriés. Ils sont immédiatement plongés dans une grande bassine d'eau claire puis les sachets nylon sont rincés individuellement sous eau courante jusqu'au moment où le liquide de rinçage est incolore. Une fois les 10 sachets (5 aliments x 2 vaches) rincés, ils sont essorés et placés à l'étuve à 60°C pendant 48 heures. Après 48 heures, les sachets sont placés 30 minutes dans un dessiccateur avant d'être pesés afin de déterminer la matière sèche résiduelle.

### a) dégradabilité apparente de la matière sèche (MS) dans le rumen

La dégradabilité apparente de la matière sèche (MS) a été déterminée en pesant le solde de la matière sèche restante dans le sachet en nylon après les différents temps d'incubation.

Les résultats obtenus sont présentés à la figure 2. Comme on peut le constater, la MS de la farine est dégradée rapidement au cours de la première heure de présence dans le jus du rumen ceci au contraire de la MS de l'aliment complémentaire extrudé sous forme de croquette selon l'invention. Par ailleurs, la MS d'un aliment identique à celui selon l'invention ne comprenant pas de matière grasse ajoutée (pas d'ajout d'huile de palme) et la MS de la forme moulue de croquette d'un aliment complémentaire extrudé selon l'invention se dégrade plus vite que la MS d'un l'aliment complémentaire extrudé sous forme de croquette selon l'invention. Après 60 minutes de dégradation dans le rumen, plus de 80% de MS subsistent encore pour un aliment complémentaire extrudé sous forme de croquette selon l'invention alors que moins de 60% de MS subsistent encore pour la farine.

Il ressort de ces cinétiques de dégradation de la MS dans le rumen que :
- (1) la forme de croquette d'un aliment complémentaire extrudé selon l'invention est avantageuse puisqu'une dégradation plus rapide de la MS est observée lorsque l'aliment complémentaire extrudé initialement sous forme de croquette est ensuite broyé et que la MS de la farine est dégradée d'autant plus rapidement ;
- (2) l'ajout de matière grasse (matière grasse ajoutée) est également avantageux puisque la MS de l'aliment complémentaire extrudé sous forme de croquette selon l'invention (comprenant un ajout de 4% de matière grasse sous forme d'huile de palme) se dégrade moins vite que la MS pour ce même aliment complémentaire où un ajout de matière grasse n'est pas effectué.

Un aliment complémentaire extrudé sous forme de croquette selon l'invention présente donc l'avantage que la MS est moins rapidement dégradée, ce qui en assure une présence de plus longue durée dans le rumen et ce qui implique par conséquent un relargage sur une plus longue durée de NH₃ dans le rumen en y évitant les pics de concentration en NH₃.

### b) dégradabilité apparente de la matière azotée totale (MAT) dans le rumen

La dégradabilité apparente de la matière azotée totale (MAT) a été déterminée selon la technique Kjeldahl bien connue. Plus particulièrement, après chaque temps d'incubation et pour chacune des deux répétitions, le contenu des sachets en nylon a été analysé comme suit : minéralisation de la totalité de l'azote sous forme NH₄⁺. Les ions ammoniums sont ensuite transformés en ammoniac grâce à la soude. Le NH₃ est ensuite recueilli et dosé selon la méthode de dosage direct. La méthodologie suivie a été adaptée à celle décrite par l'AOAC (Horwirtz, 1995).

Les résultats obtenus sont présentés à la figure 3. Comme on peut le constater, la MAT de la farine est dégradée rapidement au cours de la première heure de présence dans le jus de rumen, ceci au contraire de la MAT de l'aliment complémentaire extrudé sous forme de croquette selon l'invention . Par ailleurs, la MAT d'un aliment identique à celui selon l'invention ne comprenant pas de matière grasse ajoutée (pas d'ajout d'huile de palme) et la MAT de la forme moulue de croquette d'un aliment complémentaire extrudé selon l'invention se dégrade plus vite que la MAT d'un aliment complémentaire extrudé sous forme de croquette selon l'invention . Après 60 minutes de dégradation dans le rumen, plus de 60 à 65% de la MAT de la farine est dégradée (ce qui indique que l'urée est rapidement dégradée), ceci au contraire de la MAT de l'aliment complémentaire extrudé sous forme de croquette selon l'invention qui est encore présente à hauteur de 70% (dégradation de l'ordre de 30%) dans le rumen après 60 minutes de dégradation également.

Il ressort de ces cinétiques de dégradation de la MAT dans le rumen que :
- (1) la forme de croquette d'un aliment complémentaire extrudé selon l'invention est avantageuse puisqu'une dégradation plus rapide de la MAT est observée lorsque l'aliment complémentaire extrudé initialement sous forme de croquette est ensuite broyé et que la MAT de la farine est dégradée d'autant plus rapidement ;
- (2) l'ajout de matière grasse (matière grasse ajoutée) est également avantageux puisque la MAT de l'aliment complémentaire extrudé sous forme de croquette selon l'invention (comprenant un ajout de 4% de matière grasse sous forme d'huile de palme) se dégrade moins vite que la MAT pour ce même aliment complémentaire sous forme de croquette où un ajout de matière grasse n'est pas effectué.

Un aliment complémentaire extrudé sous forme de croquette selon l'invention présente donc l'avantage que la MAT est moins rapidement dégradée, ce qui en assure une présence de plus longue durée dans le rumen ainsi qu'une libération plus lente et progressive au cours du temps. Il en résulte que des pics de concentration en NH₃ ne sont pas observés avec un aliment complémentaire extrudé sous forme de croquette suivant l'invention et que la digestibilité des rations ingérées est d'autant meilleure.

### c) dégradabilité apparente de l'urée dans le rumen

La dégradabilité apparente de l'urée a été déterminée selon la méthode de dosage de l'urée AOAC de 1990 (950.02) pour le dosage des aliments destinés aux animaux. La première étape pour la détermination de la concentration en urée d'un aliment est son extraction et sa solubilisation. Celle-ci a été réalisée dans un ballon jaugé de 500 ml contenant un gramme d'échantillon, de l'eau milli-Q, du charbon actif et 10 ml de solution d'acétate de zinc et d'hexacyanoferrate (II) de tétrapotassium. Après une demi-heure d'agitation, le contenu du ballon a été filtré et le filtrat contenant l'urée solubilisée récupéré. 5 ml du filtrat ont ensuite été mélangés à 5 ml d'une solution de DMAB dans un tube à essais fermé (50ml). Le tube à essais a été placé 10 min au bain marie à une température de 25°C pour que la réaction entre le DMAB et l'urée puisse se faire. Cette réaction dégage de la couleur jaune qui absorbe à 420 nm. Avant de réaliser la mesure de l'absorbance, il a fallu mettre à zéro le spectromètre au moyen d'un blanc (5 ml de solution tampon + 5 ml de DMAB). Une fois le blanc défini comme zéro, le contenu du tube à essais a été versé dans une cellule (Greiners n°613101) et son absorbance a été mesurée au spectromètre (CECIL CE 2041) à 420 nm. L'absorptivité molaire (ε) a été trouvée grâce à une droite d'étalonnage à réaliser pour chaque jour de dosage. Cette droite a été réalisée via la méthode des ajouts dosés (l'absorbance de solutions contenant des concentrations d'urée croissantes a été mesurée à 420 nm).

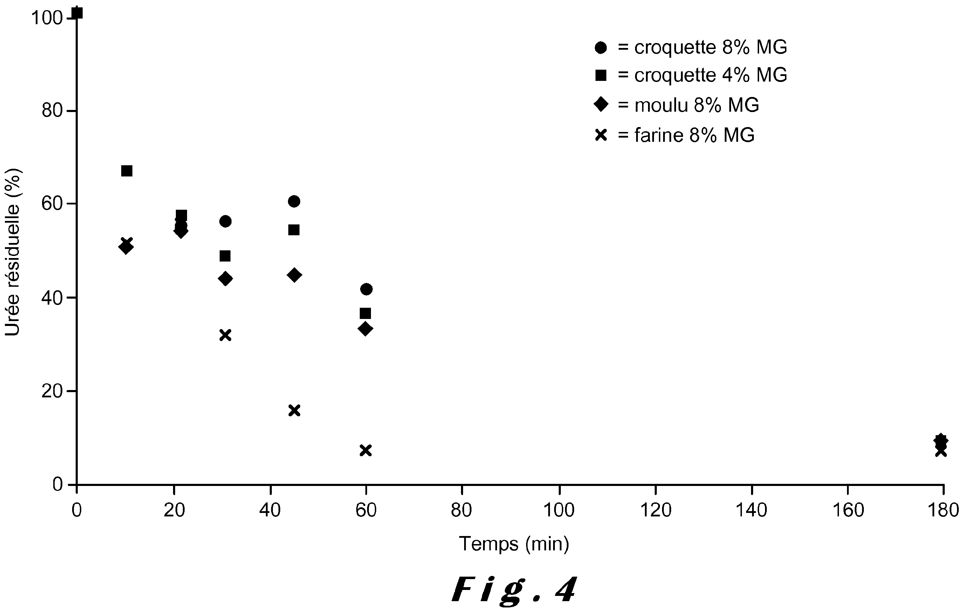

Les résultats obtenus sont présentés à la figure 4. Comme on peut le constater, l'urée de la farine est dégradée rapidement au cours de la première heure de présence dans le jus du rumen, ceci au contraire de l'urée de l'aliment complémentaire extrudé sous forme de croquette selon l'invention . Par ailleurs, l'urée d'un aliment identique à celui selon l'invention ne comprenant pas de matière grasse ajoutée (pas d'ajout d'huile de palme) et l'urée de la forme moulue de croquette d'un aliment complémentaire extrudé selon l'invention se dégrade plus vite que l'urée d'un l'aliment complémentaire extrudé sous forme de croquette selon l'invention. Après 60 minutes de dégradation dans le rumen, la quasi-totalité de l'urée (environ 90%) de la farine est dégradée, ceci au contraire de l'urée de l'aliment complémentaire extrudé sous forme de croquette selon l'invention qui est encore présente à hauteur de 45% (dégradation de l'ordre de 55%) dans le rumen après 60 minutes de dégradation également.

Il ressort de ces cinétiques de dégradation de l'urée dans le rumen que :
- (1) la forme de croquette d'un aliment complémentaire extrudé selon l'invention est avantageuse puisqu'une dégradation plus rapide de l'urée est observée lorsque l'aliment complémentaire extrudé initialement sous forme de croquette est broyé et que l'urée de la farine est dégradée d'autant plus rapidement ;
- (2) l'ajout de matière grasse (matière grasse ajoutée) est également avantageux puisque l'urée de l'aliment complémentaire extrudé sous forme de croquette selon l'invention (comprenant un ajout de 4% de matière grasse sous forme d'huile de palme) se dégrade moins vite que l'urée pour les mêmes croquette pour ce même aliment complémentaire extrudé sous forme de croquette où un ajout de matière grasse n'est pas effectué.

Un aliment complémentaire extrudé sous forme de croquette selon l'invention présente donc l'avantage que l'urée est moins rapidement dégradée, ce qui en assure une présence de plus longue durée dans le rumen ainsi qu'une libération plus lente et progressive au cours du temps. Il en résulte que des pics de concentration en NH₃ ne sont pas observés avec un aliment complémentaire sous forme de croquette extrudée suivant l'invention et que la digestibilité des rations ingérées est d'autant meilleure.

Le tableau 1 ci-dessous indique, pour les essais de cinétique de dégradation *in sacco,* les taux de dégradation de l'urée dans le rumen après 45 minutes et 60 minutes.

**Tableau 1**

| **Dégradation de l'urée (%)** | **45 minutes** | **60 minutes** |
|---|---|---|
| Farine 8% MG | 84 | 92 |
| Moulu 8% MG | 55 | 66 |
| Croquette extrudée 4% MG | 46 | 63 |
| Croquette extrudée 8% MG | 39 | 58 |

Le tableau 2 ci-dessous reprend les résultats de tests statistiques comparant deux à deux les dégradabilités obtenues avec les différents aliments complémentaires (cinétique de dégradation) (test de Tukey).

**Tableau 2**

| **Comparaison** | Signification |
|---|---|
| Extrudé moulu 8% MG/ Farine 8% MG | HS |
| Extrudé croquette 4% MG/ Farine 8% MG | HS |
| Extrudé croquette 8% MG/ Farine 8% MG | HS |
| Extrudé Croquette 8% MG / Extrudé moulu 8% MG | HS |
| Extrudé Croquette 8% MG / Extrudé croquette 4%MG | S |
| Extrudé Croquette 4% MG/ Extrudé moulu 8% MG | S |

| | |
|---|---|
| HS = différence hautement significative (P<0,01) S = différence significative (P<0,05) | |

Il ressort clairement des tableaux 1 et 2 que les taux de dégradation de l'urée dans le rumen après 45 minutes et 60 minutes sont optimisés lorsque l'aliment complémentaire se présente sous la forme d'un aliment complémentaire extrudé sous forme de croquette et lorsque l'aliment complémentaire comprend au moins une matière grasse ajoutée. Ceci fait également ressortir que, pour des vaches à l'entretien (qui ont un transit alimentaire plus lent que celui des vaches en production), la dégradation de l'urée après 60 minutes est de seulement 58% avec un aliment complémentaire extrudé sous forme de croquette suivant l'invention.

### 3. Comparaison d'une alimentation de base et d'une alimentation de base complémentée avec un aliment complémentaire selon l'invention dans un élevage laitier Holstein

Un essai comparatif a été mené sur un élevage laitier Holstein afin de comparer, en termes de production laitière et de propriétés des laits obtenus (matières utiles totales et urée dans le lait), l'impact d'une alimentation de base et d'une alimentation de base complémentée avec un aliment complémentaire selon l'invention.

Cet essai a été réalisé sur un échantillon de 55 vaches laitières nourries par distribution de la ration selon une TMR (Total Mix Ration). Deux groupes ont été formés afin de mener une étude en carré latin, les vaches étant réparties afin d'avoir un même niveau de production, un même nombre de jours en lactation et une répartition vaches primipares/vaches multipares quasiment équivalente dans chacun des groupes.

Les données relatives à chacun des groupes sont reprises ci-dessous au tableau 2 :

**Tableau 2**

| Groupe | Nombre d'individus | Parité * | Jours en lactation | kg de lait/jour | TB** | TP*** |
|---|---|---|---|---|---|---|
| 1 | 27 | 2,2 | 158 | 33,1 | 3,5 | 3,4 |
| 2 | 28 | 2,3 | 155 | 32,4 | 3,6 | 3,5 |

| | | | | | | |
|---|---|---|---|---|---|---|
| * la parité indique le nombre de vêlages ** TB signifie taux butyreux (%) *** TP signifie taux protéique (%) | | | | | | |

Les rations distribuées à chacun des groupes I et II sont identiques à l'exception du soja administré au groupe I qui est remplacé par un aliment complémentaire extrudé sous forme de croquette comprenant 8% de matière grasse (MG) selon l'invention pour le groupe II. Les rations sont donc les suivantes telles qu'indiquées au tableau 3 ci-dessous (en kg brut/vache/jour) et présentent des valeurs alimentaires similaires à l'exception du SFRE qui est plus élevé pour la ration du groupe II (voir tableau 4).

**Tableau 3**

| | Ration du groupe I | Ration du groupe II |
|---|---|---|
| Maïs ensilage | 25 | 25 |
| Pulpes de betterave surpressées | 12 | 12 |
| Ensilage d'herbe préfané | 3,5 | 3,5 |
| Drèches de brasserie | 4 | 4 |
| Paille de colza | 0,5 | 0,5 |
| Tourteau de colza | 1,76 | 1,76 |
| Soya 48 | 1,2 | 0 |
| Croquette extrudée 8% MG | 0 | 1 |
| Extraluz^{®} | 0,6 | 0,6 |
| Orge thermotraitée | 1,83 | 1,83 |
| Nutex Excell^{®} (extrudé 23% MG) | 1 | 1 |
| Bovimin digest^{®} | 0,15 | 0,15 |

**Tableau 4**

| | Ration du groupe I | Ration du groupe II |
|---|---|---|
| VEM/kq MS* | 999 | 999 |
| PBT (g/kq MS)** | 163 | 163 |
| Matière azotée rumino-dégradable (g/kg MS) | 100 | 107 |
| SFRE (g/kg MS)*** | 52 | 65 |

| | | |
|---|---|---|
| * VEM signifie *Voeder Eenheid voor Melk,* 1 VEM correspondant à la quantité d'énergie nette contenue dans 1 g d'orge ** PBT signifie protéine brute totale *** SFRE est une valeur de la quantité de protéine dégradée dans les 60 premières minutes de présence dans le jus de rumen pour l'ensemble des matières premières pouvant être valorisées dans une ration alimentaire des ruminants. Il s'agit d'une norme du système hollandais sur la dégradation de la source azotée après une heure de présence dans le rumen. Notons qu'il est établi que la ration des ruminants doit doser entre 50 et 65 g SFRE/kg de MS ingérée. Plus la valeur SFRE est faible, moins le taux d'urée dans le lait est censé être élevé. A noter que l'urée pure apporte une valeur SFRE de 2900 SFRE/kg d'urée. | | |

Du tableau 4, il peut être déduit, sur base du SFRE, que la teneur en urée dans le lait devrait être plus favorable pour un lait obtenu avec le groupe I dès lors qu'une corrélation positive est reconnue entre le SFRE/kg de MS d'une ration alimentaire et la teneur en urée dans le lait : le SFRE est un bon indicateur de prédiction des déperditions azotées sous forme d'urée dans le lait ; plus SFRE est faible, moins il devrait y avoir d'urée dans le lait.

Les résultats obtenus en termes de production et de qualité laitière sont repris au tableau 5 :

**Tableau 5**

| | Groupe I | Groupe II | Analyse statistique (test de Fisher) |
|---|---|---|---|
| Lait (kg/j)* | 33,10 | 33,20 | NS**** |
| Lait 10 jours (kg/j)** | 32,95 | 32,65 | NS |
| Matières utiles totales (q/j) *** | 2217 | 2213 | NS |
| Urée (mg/l) | 221 | 197 | < 0,01 |

| | | | |
|---|---|---|---|
| * Production laitière mesurée les jours d'analyse de la composition du lait ** Production laitière moyenne sur les dix derniers jours de chaque période du carré latin (essai en carré latin) *** MG + protéines **** NS signifie « différence statistiquement non significative » | | | |

Comme il ressort de ce tableau 5, la concentration en urée dans le lait du groupe II dont la ration comprend, au lieu du soja, un aliment complémentaire extrudé sous forme de croquette suivant l'invention, est avantageusement inférieure à la concentration en urée dans le lait du groupe I alors que des niveaux de production équivalents sont atteints. Contre toute attente, on note également que même si la valeur SFRE était plus favorable pour le groupe I (voir tableau 4) et prédisait donc un taux en urée moindre dans le lait issu de ce groupe I par rapport au groupe II, il n'en est rien puisque, au contraire, un taux en urée plus faible est mesuré dans le lait issu du groupe II présentant un SFRE pourtant plus élevé. Ceci fait ressortir que :
- (1) un aliment extrudé obtenu par le procédé selon l'invention sous forme de croquette et avec de la matière grasse ajoutée (à hauteur de 4% pour l'exemple) permet de maitriser les apports en ANP et de relargage en NH₃ de telle sorte à éliminer la problématique de gaspillage azoté ;
- (2) la source azotée contenue dans un tel aliment obtenu par le procédé selon l'invention est protégée et assure une libération lente de NH₃, ce qui permet d'améliorer la fonction du rumen.

## Revendications

1. Procédé de fabrication d'un aliment complémentaire extrudé sous forme de croquette, en particulier procédé de fabrication d'un aliment complémentaire extrudé sous forme de croquette pour ruminant, comprenant :
- un étape de mélange pour obtenir un premier mélange contenant au moins de l'amidon, de la cellulose et au moins une matière grasse ajoutée,
- une étape de broyage dudit premier mélange avec formation d'un premier mélange broyé,
- une étape d'addition d'au moins une source d'azote non protéique audit premier mélange broyé avec formation d'un deuxième mélange,
- une étape de conditionnement par précuisson, ladite étape de conditionnement par précuisson étant une étape de conditionnement par précuisson dudit deuxième mélange,
- une étape d'extrusion, ladite étape d'extrusion étant une étape d'extrusion dudit deuxième mélange précuit, et
- une étape de séchage et de refroidissement, dans lequel ledit aliment complémentaire comprend au moins une source d'azote non protéique, de l'amidon et de la cellulose, ledit aliment complémentaire étant **caractérisé en ce qu'**il comprend en outre 2 à 15% en poids, de préférence 4 à 6% en poids d'au moins une matière grasse ajoutée par rapport au poids total dudit aliment complémentaire, le dit aliment présente un poids spécifique inférieur ou égal à 515 kg/m³et ledit amidon et/ou ladite cellulose sont présents dans une matière première ou dans un extrait d'une matière première ou dans un tourteau d'une matière première étant choisie dans le groupe constitué de l'orge, du rebulet d'orge, d'orge issu de malterie, de radicelles d'orge, de drêches d'orge, de son d'orge, du maïs, de drêches de maïs, de rafles de maïs, de rebulet de maïs, de son de maïs, de gluten feed de maïs, d'épis de maïs, de l'avoine, de rebulet d'avoine, de son d'avoine, de cosses d'avoine, de gruau d'avoine, du riz, du son de riz, de rebulet de riz, de drêches de riz, de germes de riz expeller, du seigle, de rebulet de seigle, de son de seigle, du sorgho, de l'épeautre, du son d'épeautre, des cosses d'épeautre, de rebulet d'épeautre, du triticale, du blé, de rebulet de blé, de son de blé, de blé issu de malterie, de drêches de blé, de gluten feed de blé, de babassu expeller, de camelina expeller, de cosses de cacao, de tourteau de cacao, de graines de coprah, de coprah expeller, de graines de cotton, de graines de cotton expeller, de tourteau de cotton, d'arachide, de tourteau d'arachide, d'arachide expeller, de graines de kapok, de kapok expeller, de graines de lin, de lin expeller, de son de moutarde, de graines de Niger, de graines de Niger expeller, de pulpes d'olive, de tourteau de palmiste, de graines de colza, de colza expeller, de tourteau de colza, de graines de carthame, de tourteau de carthame, de cosses de carthame, de graines de sésame, de sésame expeller, de cosses de sésame, de graines de soja, de soja expeller, de tourteau de soja, de cosses de soja, de graines de tournesol, de tournesol expeller, de tourteau de tournesol, de cosses de tournesol, de graines de chanvre, de chanvre expeller, d'huile de chanvre, de caroube, de gousses de caroube, de féverole, de cosses de féverole, de tourteau de guar, de lentille, de cosses de lentille, de lupin, de cosses de lupin, de pulpe de lupin, de rebulet de lupin, de pois, de son de pois, de cosses de pois, de rebulet de pois, de pulpe de pois, de pulpes de betterave, de carottes, de pelures de carotte, de racines de carotte, de pulpes de carotte, de racines de chicorée, de mélasse de chicorée, de pulpes de chicorée, de pulpes d'oignons, d'oignons fris, de pelures de pomme de terre, de pulpes de pomme de terre, de flocons de pomme de terre, de boutures de pomme de terre, de glands, de coque de gland, d'amandes, de coques d'amande, de pulpes de pommes, de mélasses de pomme, de sarrasin, de son et balles de sarrasin, de rebulet de sarrasin, de châtaignes, de pulpes d'agrumes, de coques de café, de dattes, de pulpes de fruits, de cresson, de pépins de raisins, de tourteaux de pépins de raisins, de pulpes de raisins, de pulpes de tomates, de luzerne, de millet, de manioc, de patate douce, de panais, de topinambour, d'igname, de taro, de citrouille, de tapioca, de noix de cajou, de graines de lotus, de pistache, de niébé, de banane, de banane plantain et de leurs mélanges.

2. Procédé de fabrication d'un aliment complémentaire extrudé sous forme de croquette selon la revendication 1, dans lequel ladite étape de broyage donne lieu à un mélange broyé sous forme d'une farine dont 70% des particules présentent une taille comprise entre 0,5 et 1 mm.

3. Procédé de fabrication d'un aliment complémentaire extrudé sous forme de croquette selon la revendication 1 ou 2, dans lequel ladite étape d'addition d'au moins une source d'azote non protéique est une étape d'addition d'au moins une source d'azote non protéique sous forme de granulés, de farine, de poudre, de paillettes ou de billes présentant une taille moyenne comprise entre 0,25 et 5 mm, de préférence une taille moyenne comprise entre 0,5 et 3 mm, préférentiellement une taille moyenne comprise entre 1 et 2 mm.

4. Procédé de fabrication d'un aliment complémentaire extrudé sous forme de croquette selon l'une quelconque des revendications 1 à 3, comprenant, lors de ladite étape de mélange pour obtenir un premier mélange, une addition d'au moins une matière grasse ajoutée en une quantité en poids comprise entre 1 et 7% en poids par rapport au poids total dudit premier mélange.

5. Procédé de fabrication d'un aliment complémentaire extrudé sous forme de croquette selon l'une quelconque des revendications 1 à 4, dans lequel ladite étape de mélange pour obtenir un premier mélange met en oeuvre une quantité en poids d'amidon comprise entre 10 et 35% par rapport au poids total dudit premier mélange.

6. Procédé de fabrication d'un aliment complémentaire extrudé sous forme de croquette selon l'une quelconque des revendications 1 à 5, dans lequel ladite étape de conditionnement par précuisson est réalisée par injection d'eau et/ou de vapeur d'eau à une température comprise entre 90 et 120°C dans ledit deuxième mélange pendant une période de temps comprise entre 1 et 10 minutes, préférentiellement 3 minutes.

7. Procédé de fabrication d'un aliment complémentaire extrudé sous forme de croquette selon l'une quelconque des revendications 1 à 6, dans lequel ladite étape d'extrusion est réalisée par injection d'eau et/ou de vapeur d'eau dans ledit deuxième mélange à une température comprise entre 100 et 150°C et à une pression comprise entre 15 et 25 Pa pendant une période de temps comprise entre 30 et 50 secondes.

## Patentansprüche

1. Verfahren zur Herstellung eines extrudierten Ergänzungsfuttermittels in Form von Kroketten, insbesondere Verfahren zur Herstellung eines extrudierten Ergänzungsfuttermittels in Form von Kroketten für Wiederkäuer, umfassend:
- einen Schritt des Mischens, um eine erste Mischung zu erhalten, die mindestens Stärke, Cellulose und mindestens ein zugesetztes Fett enthält,
- einen Schritt des Mahlens der ersten Mischung mit Bildung einer ersten gemahlenen Mischung,
- einen Schritt des Zugebens mindestens einer Nicht-Protein-Stickstoffquelle zu der ersten gemahlenen Mischung mit Bildung einer zweiten Mischung,
- einen Schritt des Aufbereitens durch Vorkochen, wobei der Schritt des Aufbereitens durch Vorkochen ein Schritt des Aufbereitens durch Vorkochen der zweiten Mischung ist,
- einen Schritt des Extrudierens, wobei der Schritt des Extrudierens ein Schritt des Extrudierens der vorgekochten zweiten Mischung ist, und
- einen Schritt des Trocknens und Kühlens, wobei das Ergänzungsfuttermittel mindestens eine Nicht-Protein-Stickstoffquelle, Stärke und Cellulose umfasst, wobei das Ergänzungsfuttermittel **dadurch gekennzeichnet ist, dass** es weiter 2 bis 15 Gew.-%, vorzugsweise 4 bis 6 Gew.-%, mindestens eines zugesetzten Fetts, bezogen auf das Gesamtgewicht des Ergänzungsfuttermittels, umfasst, das Futtermittel ein spezifisches Gewicht von kleiner oder gleich 515 kg/m³ aufweist und die Stärke und/oder die Cellulose in einem Rohstoff oder in einem Extrakt eines Rohstoffs oder in einem Presskuchen eines Rohstoffs vorhanden sind, ausgewählt aus der Gruppe bestehend aus Gerste, Gerstendunst, Gerste aus der Mälzerei, Gerstenwürzelchen, Gerstentrebern, Gerstenkleie, Mais, Maistrebern, Maisspindeln, Maisdunst, Maiskleie, Maisglutenfutter, Maiskolben, Hafer, Haferdunst, Haferkleie, Haferschalen, Hafergrütze, Reis, Reiskleie, Reisdunst, Reistrebern, Reiskeim-Expeller, Roggen, Roggendunst, Roggenkleie, Sorghum, Dinkel, Dinkelkleie, Dinkelschalen, Dinkeldunst, Triticale, Weizen, Weizendunst, Weizenkleie, Weizen aus der Mälzerei, Weizentrebern, Weizenglutenfutter, Babassu-Expeller, Camelina-Expeller, Kakaoschalen, Kakaopresskuchen, Koprasamen, Kopra-Expeller, Baumwollsamen, Baumwollsamen-Expeller, Baumwollpresskuchen, Erdnuss, Erdnusspresskuchen, Erdnuss-Expeller, Kapoksamen, Kapok-Expeller, Leinsamen, Lein-Expeller, Senfkleie, Nigersamen, Nigersamen-Expeller, Olivenpulpen, Palmkernpresskuchen, Rapssamen, Raps-Expeller, Rapspresskuchen, Färberdistelsamen, Färberdistelpresskuchen, Färberdistelschalen, Sesamsamen, Sesam-Expeller, Sesamschalen, Sojasamen, Soja-Expeller, Sojapresskuchen, Sojaschalen, Sonnenblumensamen, Sonnenblumen-Expeller, Sonnenblumenpresskuchen, Sonnenblumenschalen, Hanfsamen, Hanf-Expeller, Hanföl, Johannisbrot, Johannisbrotschoten, Ackerbohnen, Ackerbohnenschalen, Guarbohnenpresskuchen, Linsen, Linsenschalen, Lupine, Lupinenschalen, Lupinenpulpe, Lupinendunst, Erbsen, Erbsenkleie, Erbsenschalen, Erbsendunst, Erbsenpulpe, Rübenpulpen, Karotten, Karottenschalen, Karottenwurzeln, Karottenpulpen, Zichorienwurzeln, Zichorienmelasse, Zichorienpulpen, Zwiebelpulpen, gebratenen Zwiebeln, Kartoffelschalen, Kartoffelpulpen, Kartoffelflocken, Kartoffelstecklingen, Eicheln, Eichelschalen, Mandeln, Mandelschalen, Apfelpulpen, Apfelmelassen, Buchweizen, Buchweizenkleie und -spreu, Buchweizendunst, Kastanien, Zitrusfrüchtepulpen, Kaffeeschalen, Datteln, Fruchtpulpen, Kresse, Traubenkernen, Traubenkernpresskuchen, Traubenpulpen, Tomatenpulpen, Luzerne, Hirse, Maniok, Süßkartoffel, Pastinake, Topinambur, Yamswurzel, Taro, Kürbis, Tapioka, Cashewnuss, Lotussamen, Pistazie, Langbohne, Banane, Kochbanane und deren Mischungen.

2. Verfahren zur Herstellung eines extrudierten Ergänzungsfuttermittels in Form von Kroketten nach Anspruch 1, wobei der Schritt des Mahlens zu einer gemahlenen Mischung in Form eines Mehls führt, von dem 70 % der Teilchen eine Größe im Bereich zwischen 0,5 und 1 mm aufweisen.

3. Verfahren zur Herstellung eines extrudierten Ergänzungsfuttermittels in Form von Kroketten nach Anspruch 1 oder 2, wobei der Schritt des Zugebens mindestens einer Nicht-Protein-Stickstoffquelle ein Schritt des Zugebens mindestens einer Nicht-Protein-Stickstoffquelle in Form von Granulaten, Mehl, Pulver, Flocken oder Kugeln ist, die eine mittlere Größe im Bereich zwischen 0,25 und 5 mm, vorzugsweise eine mittlere Größe im Bereich zwischen 0,5 und 3 mm, bevorzugt eine mittlere Größe im Bereich zwischen 1 und 2 mm aufweisen.

4. Verfahren zur Herstellung eines extrudierten Ergänzungsfuttermittels in Form von Kroketten nach einem der Ansprüche 1 bis 3, das bei dem Schritt des Mischens, um eine erste Mischung zu erhalten, ein Zugeben mindestens eines zugesetzten Fetts in einer Gewichtsmenge im Bereich zwischen 1 und 7 Gew.-%, bezogen auf das Gesamtgewicht der ersten Mischung, umfasst.

5. Verfahren zur Herstellung eines extrudierten Ergänzungsfuttermittels in Form von Kroketten nach einem der Ansprüche 1 bis 4, wobei bei dem Schritt des Mischens, um eine erste Mischung zu erhalten, eine Gewichtsmenge an Stärke im Bereich zwischen 10 und 35 %, bezogen auf das Gesamtgewicht der ersten Mischung, eingesetzt wird.

6. Verfahren zur Herstellung eines extrudierten Ergänzungsfuttermittels in Form von Kroketten nach einem der Ansprüche 1 bis 5, wobei der Schritt des Aufbereitens durch Vorkochen durch Einspritzen von Wasser und/oder Wasserdampf bei einer Temperatur im Bereich zwischen 90 und 120 °C in die zweite Mischung während eines Zeitraums im Bereich zwischen 1 und 10 Minuten, bevorzugt 3 Minuten, ausgeführt wird.

7. Verfahren zur Herstellung eines extrudierten Ergänzungsfuttermittels in Form von Kroketten nach einem der Ansprüche 1 bis 6, wobei der Schritt des Extrudierens durch Einspritzen von Wasser und/oder Wasserdampf in die zweite Mischung bei einer Temperatur im Bereich zwischen 100 und 150 °C und bei einem Druck im Bereich zwischen 15 und 25 Pa während eines Zeitraums im Bereich zwischen 30 und 50 Sekunden ausgeführt wird.

## Claims

1. Method for manufacturing an extruded food supplement in kibble form, in particular method for manufacturing an extruded food supplement in kibble form for a ruminant, comprising:
- a step of mixing to obtain a first mixture containing at least starch, cellulose and at least one added fat,
- a step of grinding said first mixture with the formation of a first ground mixture,
- a step of adding at least one source of non-protein nitrogen to said first ground mixture with the formation of a second mixture,
- a step of packaging by precooking, said step of packaging by precooking being a step of packaging by precooking of said second mixture,
- a step of extruding, said step of extruding being a step of extruding of said second precooked mixture, and
- a step of drying and cooling, wherein said food supplement comprises at least one source of non-protein nitrogen, starch and cellulose, said food supplement being **characterized in that** it further comprises 2 to 15% by weight, preferably 4 to 6% by weight of at least one fat added with respect to the total weight of said food supplement, said food has a specific weight less than or equal to 515 kg/m³ and said starch and/or said cellulose are present in a raw material or in an extract of a raw material or in a cake of a raw material being chosen from the group formed of barley, barley pollard, malting barley, barley sprouts, spent barley, barley bran, corn, spent corn, corn cobs, corn pollard, corn bran, corn gluten feed, corn ears, oat, oat pollard, oat bran, oat hulls, oatmeal, rice, rice bran, rice pollard, spent rice, rice germ expeller, rye, rye pollard, rye bran, sorghum, spelt, spelt bran, spelt hulls, spelt pollard, triticale, wheat, wheat pollard, wheat bran, malting wheat, spent wheat, wheat gluten feed, babassu expeller, camelina expeller, cocoa hulls, cocoa cake, copra seeds, copra expeller, cotton seeds, cotton expeller seeds, cotton cake, peanut, peanut cake, peanut expeller, kapok seeds, kapok expeller, flax seeds, flax expeller, mustard bran, Niger seeds, Niger seed expeller, olive pulp, palm kernel cake, rape seed, rape seed expeller, rape seed cake, safflower seeds, safflower seed cake, safflower seed hulls, sesame seeds, sesame seed expeller, sesame hulls, soy beans, soy expeller, soy meal, soy hulls, sunflower seeds, sunflower expeller, sunflower cake, sunflower hulls, hemp seeds, hemp expeller, hemp oil, carob, carob pods, faba bean, faba bean hulls, guar cake, lentil, lentil hulls, lupin, lupin hulls, lupin pulp, lupin pollard, pea, pea bran, pea hulls, pea pollard, pea pulp, beet pulps, carrot, carrot peelings, carrot roots, carrot pulps, chicory roots, chicory molasses, chicory pulps, onion pulps, fried onions, potato peelings, potato pulps, potato flakes, potato cuttings, acorns, acorn shell, almonds, almond shells, apple pulmps, apple molasses, buckwheat, buckwheat bran and chaff, buckwheat pollard, chestnuts, citrus pulps, coffee husks, dates, fruit pulps, watercress, grape seeds, grape seed cakes, grape pulps, tomato pulps, alfalfa, millet, manioc, sweet potato, parsnip, Jerusalem artichoke, yam, taro, pumpkin, tapioca, cashew nut, lotus seed, pistachio, cowpea, banana, plantain banana and mixtures thereof.

2. Method for manufacturing an extruded food supplement in kibble form according to claim 1, wherein said step of grinding gives rise to a ground mixture in the form of a flour of which 70% of the particles have a size comprised between 0.5 and 1 mm.

3. Method for manufacturing an extruded food supplement in kibble form according to claim 1 or 2, wherein said step of adding at least one source of non-protein nitrogen is a step of adding at least one source of non-protein nitrogen in the form of granules, flour, powder, flakes or beads that have an average size comprised between 0.25 and 5 mm, preferably an average size comprised between 0.5 and 3 mm, preferentially an average size comprised between 1 and 2 mm.

4. Method for manufacturing an extruded food supplement in kibble form according to any one of claims 1 to 3, comprising, during said step of mixing to obtain a first mixture, an adding of at least one fat added in a quantity by weight comprised between 1 and 7% by weight with respect to the total weight of said first mixture.

5. Method for manufacturing an extruded food supplement in kibble form according to any one of claims 1 to 4, wherein said step of mixing to obtain a first mixture implements a quantity by weight of starch comprised between 10 and 35% with respect to the total weight of said first mixture.

6. Method for manufacturing an extruded food supplement in kibble form according to any one of claims 1 to 5, wherein said step of packaging by precooking is carried out by injecting water and/or steam at a temperature comprised between 90 and 120°C into said second mixture for a period of time comprised between 1 and 10 minutes, preferentially 3 minutes.

7. Method for manufacturing an extruded food supplement in kibble form according to any one of claims 1 to 6, wherein said step of extruding is carried out by injecting water and/or steam into said second mixture at a temperature comprised between 100 and 150°C and at a pressure comprised between 15 and 25 Pa for a period of time comprised between 30 and 50 seconds.
